# EUROPEAN PATENT APPLICATION

(11) **EP 4 684 932 A1**
(43) Date of publication of application: **28.01.2026**
(21) Application number: 24901054.7
(22) Date of filing: 04.12.2024
(51) Int. Cl.: B26D 7/18, B26D 1/24, H01M 4/04, H01M 10/04, B65H 23/038, B65H 35/02

(54) **DISCHARGE DEVICE, ELECTRODE SLITTING SYSTEM, AND ELECTRODE MANUFACTURING METHOD USING SAME**

(30) Priority: 06.12.2023 KR 20230175713
(71) Applicant: LG Energy Solution, Ltd., Seoul 07335 (KR)
(72) Inventor: JEONG, Dong Hwi, Daejeon 34122 (KR)
(74) Representative: Goddar, Heinz J.
(86) International application number: PCT/KR2024/019683
(87) International publication number: WO 2025/121868

(57) **Abstract**

The present invention is a discharge device arranged so that to form a plurality of electrodes, an electrode sheet is cut in a width direction, and then the remaining cutting residue excluding the plurality of electrodes is discharged to the outside, which comprises: a discharge part arranged to discharge the cutting residue to the outside; a discharge guide roller arranged to transfer the cutting residue to the discharge part; and a meandering adjustment roller provided during a process of transferring the cutting residue to the discharge part, and having a comb pattern formed on a surface so that a position of the cutting residue in contact with a roll surface is adjusted in one direction or the other direction.

## Description

### Technical Field

The present invention relates to a discharge device, an electrode slitting system, and an electrode manufacturing method using the same, and more specifically, relates to a discharge device and an electrode slitting system, capable of preventing disconnection of cutting residues of an electrode sheet and minimizing damage to a cut surface of a cut electrode, and an electrode manufacturing method using the same.

This application claims the benefit of priority based on Korean Patent Application No. 10-2023-0175713 dated December 6, 2023, the disclosure of which is incorporated herein by reference in its entirety.

### Background Art

Recently, rechargeable secondary batteries have been widely used as an energy source for wireless mobile devices. In addition, secondary batteries have also attracted attention as an energy source for electric transportation devices, hybrid electric transportation devices, and the like., which are proposed as a solution to air pollution from existing gasoline transportation devices, diesel transportation devices, and the like, using fossil fuels. Therefore, the types of applications that use secondary batteries are very diverse due to the advantages of secondary batteries, and it is expected that secondary batteries will be applied to more fields and products in the future.

Such a secondary battery comprises an electrode assembly in which electrodes and separators are alternately laminated, and a case accommodating the electrode assembly, where the electrode assembly has a structure in which multiple electrodes and multiple separators are alternately laminated.

Then, the secondary battery comprises an electrode manufacturing process for manufacturing electrodes, an electrode assembly assembling process for assembling an electrode assembly by laminating the manufactured electrodes and separators, and a process for manufacturing a secondary battery by accommodating the manufactured electrode assembly in a case.

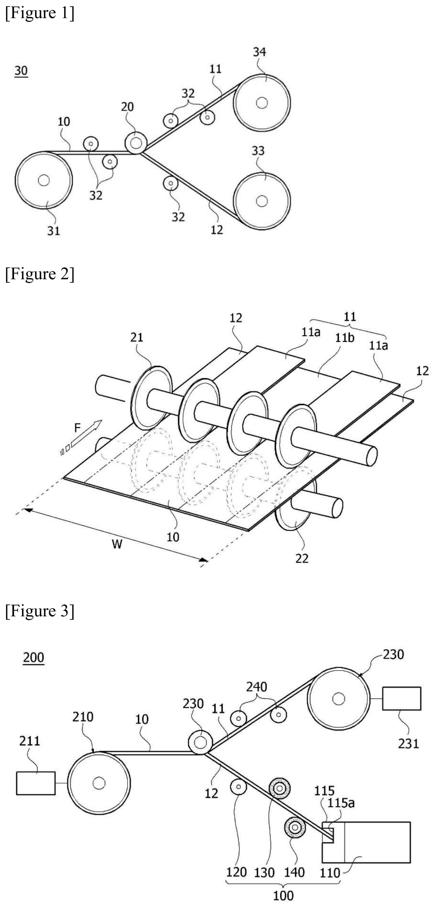

Figure 1 is a schematic diagram schematically showing an appearance of one electrode slitting device (30) of a conventional art. Figure 2 is a schematic diagram schematically showing an appearance of cutting an electrode sheet (10) of one electrode slitting device (30) of a conventional art.

Referring to Figures 1 and 2, in the electrode manufacturing process, an electrode sheet (10) supplied from an unwinder (31) is transferred to an electrode cutting part (20) through a transfer roller (32), and the electrode sheet (10) is moved in a transfer direction (F) between an upper blade (21) and a lower blade (22) of the cutting part (20), thereby cutting the electrode sheet (10) at regular intervals in the width direction to form a plurality of electrodes (11). Each of the electrodes formed by being cut into a plurality of pieces is wound on an electrode recovery rewinder (34) while being transferred along a relevant lane.

At this time, the electrode portion formed by cutting the electrode sheet is called a slitting lane, and the lane located at the edge portion excluding the slitting lane is called an edge lane (12). Such edge lanes (12) are unnecessary portions that are not used as electrodes, which are directly discharged to the outside, or are wound around a waste rewinder (33) and recovered, and then discharged to the outside.

However, in the electrode manufacturing process of the conventional art, if meandering adjustment or tension adjustment is not performed during a process in which the edge lane (12) created by trimming the edge of the electrode sheet (10) is moved through the transfer roller (32), interference has easily occurred between the edge lane (12) and an adjacent slitting lane (11a) among the slitting lanes (11a, 11b). Due to this interference, disconnection of the edge lane (12) has occurred, or if the separated distance between the edge lane (12) and the slitting lane (11a) is too wide, serious damage to the cut surface of the slitting lane has occurred. For example, due to the cut surface damage of the slitting lane, some tears may occur, sharp metal burrs on the cut surface, or curls with curved edges may be generated.

Therefore, improvements are needed in processes and devices for preventing interference between the edge lane and the slitting lane used as the electrode that may occur during the cutting process and the discharge process, and for improving the quality of the cut surface of the slitting lane.

### Disclosure

### Technical Problem

The present invention is intended to solve problems occurring in the conventional process of cutting an electrode sheet and transporting the cutting residue.

Through one example of the present invention, it is intended to provide a discharge device and an electrode slitting system capable of preventing disconnection of a cutting residue due to interference occurrence between cut electrodes generated without performing meandering adjustment in a discharge process, and also preventing the separated distance between the cutting residue and the cut electrode from becoming too wide, thereby preventing damage to the cut surface of the cut electrode from occurring, and an electrode manufacturing method using the same.

### Technical Solution

In order to achieve the above-described object, according to one example of the present invention, it provides a discharge device arranged so that to form a plurality of electrodes, an electrode sheet is cut in a width direction, and then the remaining cutting residue excluding the plurality of electrodes is discharged to the outside, wherein the discharge device comprises: a discharge part arranged to discharge the cutting residue to the outside; a discharge guide roller arranged to transfer the cutting residue to the discharge part; and a meandering adjustment roller provided during a process of transferring the cutting residue to the discharge part, and having a structured surface in at least some regions so that a position of the cutting residue in contact with a roll surface is adjusted in one direction or the other direction.

The structured surface may comprise a comb pattern arranged in a direction inclined with respect to a rotation axis of the meandering adjustment roller.

The meandering adjustment roller may comprise a rotation axis arranged to rotate, to transmit a rotational force to the cutting residue; and an elastic roll provided on the rotation axis and having the comb pattern formed on a surface.

In the meandering adjustment roller, a first comb pattern arranged to move the position of the cutting residue in one direction on the meandering adjustment roller; and a second comb pattern positioned apart from the first comb pattern and arranged to move it in the other direction on the meandering adjustment roller may be formed on the surface.

In addition, the first comb pattern and the second comb pattern may be arranged to apply forces to the cutting residue passing through each comb pattern in directions toward the center of the rotation axis direction of the meandering adjustment roller, respectively.

The first comb pattern may be a comb pattern formed on one side portion based on the center of the rotation axis direction of the meandering adjustment roller, and inclined toward the center from one side, and the second comb pattern may be a comb pattern formed on the other side portion based on the center of the rotation axis direction of the meandering adjustment roller, and inclined toward the center from the other side, and a plain pattern may be configured between the first comb pattern and the second comb pattern.

It may further comprise a position adjustment part arranged to adjust the position of the meandering adjustment roller in one direction or the other direction.

It may further comprise a tension adjustment roller arranged to pressurize the cutting residue to be transferred, to maintain the tension of the cutting residue wound around the discharge guide roller constantly.

The discharge part may comprise a suction unit arranged so that the cutting residue is sucked and discharged to the outside.

In order to achieve the above-described object, according to one example of the present invention, it provides an electrode slitting system for forming a plurality of electrodes by cutting an electrode sheet in a width direction, wherein the electrode slitting system comprises: a supply part supplying the electrode sheet; an electrode cutting part forming a plurality of electrodes by cutting the electrode sheet supplied from the supply part in a width direction; a winding part provided with a recovery roll winding the plurality of electrodes; a transfer roller arranged to transfer the plurality of electrodes to the winding part; a discharge part discharging the cutting residue remaining after cutting the electrode sheet to the outside; a discharge guide roller arranged to transfer the cutting residue to the discharge part; and a meandering adjustment roller provided during a transfer process of the discharge part in the electrode cutting part, and having a comb pattern formed on a surface so that a position of the cutting residue in contact with a roll surface is adjusted in one direction or the other direction.

The structured surface may comprise a comb pattern arranged in a direction inclined with respect to a rotation axis of the meandering adjustment roller.

The meandering adjustment roller may comprise a rotation axis arranged to rotate, to transmit a rotational force to the cutting residue; and an elastic roll provided on the rotation axis and having the comb pattern formed on a surface.

In the meandering adjustment roller, to adjust the meandering of the cut portion of the electrode sheet, a first comb pattern arranged to move the position of the cutting residue in one direction on the meandering adjustment roller; and a second comb pattern positioned apart from the first comb pattern and arranged to move it in the other direction on the meandering adjustment roller may be formed on the surface.

In addition, the first comb pattern and the second comb pattern may be arranged to apply forces to the cutting residue passing through each comb pattern in directions toward the center of the rotation axis direction of the meandering adjustment roller, respectively.

It may further comprise a position adjustment part arranged to adjust the position of the meandering adjustment roller in one direction or the other direction.

It may further comprise a tension adjustment roller arranged to pressurize the cutting residue to be transferred, to maintain the tension of the cutting residue wound around the discharge guide roller constantly.

The discharge part may comprise a suction unit arranged so that the cutting residue is sucked and discharged to the outside.

In order to achieve the above-described object, according to one example of the present invention, it provides a method for manufacturing a plurality of electrodes by cutting an electrode sheet using a slitting system comprising a supply part, an electrode cutting part, a winding part, a transfer roller, a discharge part, a discharge guide roller, and a meandering adjustment roller, wherein the electrode manufacturing method comprises: a supply step in which the supply part supplies the electrode sheets to the electrode cutting part; a forming step in which the electrode cutting part cuts the supplied electrode sheets in a width direction to form a plurality of electrodes; a winding transfer step in which the formed plurality of electrodes is transferred to the winding part; a winding recovery step in which the winding part winds the formed plurality of electrodes; a discharge transfer step in which the discharge guide roller transfers the cutting residue remaining after cutting the electrode sheet to the discharge part; a meandering adjustment step in which the meandering adjustment roller adjusts a position of the cutting residue in contact with a roll surface during a transfer process of the discharge part in the electrode cutting part in one direction or the other direction; and a final discharge step in which the discharge part discharges the cutting residue to the outside.

### Advantageous Effects

Through one example of the present invention, the discharge device of the present invention can prevent disconnection due to interference occurrence between cut electrodes generated without performing meandering adjustment in the discharge process.

In addition, the present invention can prevent the separated distance between the cutting residue and the cut electrode from becoming too wide, thereby preventing damage to the cut surface of the cut electrode from occurring, so that there is an advantage that an electrode quality can be effectively increased.

### Description of Drawings

Figure 1 is a schematic diagram schematically showing an appearance of one electrode slitting device of a conventional art.
Figure 2 is a schematic diagram schematically showing an appearance of cutting an electrode sheet of one electrode slitting device of a conventional art.
Figure 3 is a schematic diagram schematically showing an appearance of an electrode slitting system comprising a discharge device according to one example of the present invention.
Figure 4 is a perspective diagram schematically showing an appearance of a meandering adjustment roller of a discharge device according to one example of the present invention.
Figure 5 is a perspective diagram schematically showing an appearance in which meandering is adjusted through a meandering adjustment roller of a discharge device according to one example of the present invention.
Figure 6 is a perspective diagram schematically showing an appearance in which meandering is adjusted through a meandering adjustment roller of a discharge device according to another example of the present invention.
Figure 7 is a flowchart showing a method for manufacturing a plurality of electrodes according to one example of the present invention.

### Mode for Invention

Hereinafter, a discharge device and an electrode slitting system according to one example of the present invention will be described in detail with reference to the attached drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

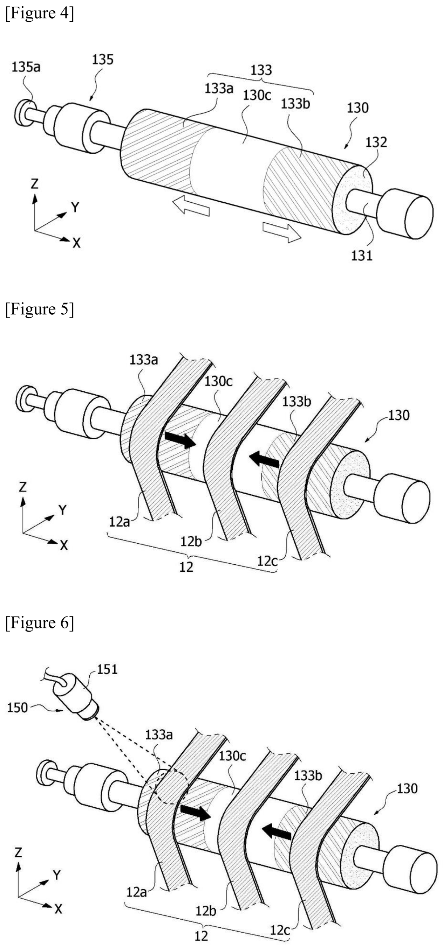

Figure 3 is a schematic diagram schematically showing an appearance of an electrode slitting system (200) comprising a discharge device (100) according to one example of the present invention. Figure 4 is a perspective diagram schematically showing an appearance of a meandering adjustment roller (130) of a discharge device (100) according to one example of the present invention. Then, Figure 5 is a perspective diagram schematically showing an appearance in which meandering is adjusted through a meandering adjustment roller (130) of a discharge device (100) according to one example of the present invention.

Referring to Figures 3 to 5, the discharge device (100) according to one example of the present invention may be arranged so that to form a plurality of electrodes (11), an electrode sheet (10) is cut in a width direction, and then the remaining cutting residue (12) excluding the plurality of electrodes (11) is discharged.

To this end, the discharge device (100) of the present invention comprises a discharge part (110), a discharge roller (120), and a meandering adjustment roller (130). Specifically, the discharge part (110) may be arranged to discharge the cutting residue (12) to the outside. For example, the discharge part (110) may transfer the acquired cutting residue (12) to an external waste deposit along a suction pipe (not shown) in a suction manner. To this end, the discharge part (110) may comprise a negative pressure pump generating a negative pressure. For example, the negative pressure pump may be a diaphragm pump, a rotary pump, a vacuum pump, or the like.

Also, the discharge roller (120) may be arranged to transfer the cutting residue (12) to the discharge part (110). Specifically, the discharge roller (120) comprises a roll for supporting and moving the cutting residue (12). The discharge roller (120) is provided with a support (not shown) supporting the roll. The discharge roller (120) is provided with a drive device (not shown) rotating the rotation axis (131) of the roll.

In addition, the meandering adjustment roller (130) may be provided during a process of transferring the cutting residue (12) to the discharge part (110). The meandering adjustment roller (130) may have a structured surface in at least some regions so that a position of the cutting residue (12) in contact with the roll surface is positional shift-adjusted in one direction or the other direction. Here, the structured surface may be processed into an embossed (protrusion)/incised (groove) pattern using laser processing, CNC processing, or the like to be created, or a specific pattern may be created by modifying surface physical properties, or by using a method such as deposition, coating, or printing. However, it is not necessarily limited to these processing methods, and any general method for processing the roll surface may be applied. Furthermore, the roughness of the structured surface needs to be set to a level without causing disconnection of the cutting residue (12).

For example, the meandering adjustment roller (130) may be arranged to shift the cutting residue (12) located on the surface in one direction (positive direction of the X-axis) of the rotation axis (131) direction, or the other direction (negative direction of the X-axis).

The meandering adjustment roller (130) may have a comb pattern (133) formed on the roll surface for meandering adjustment. In the cutting residue (12), the comb pattern (133) of the meandering adjustment roller (130) may generate a frictional force in one direction or the other direction with the transferred cutting residue (12). That is, the meandering adjustment roller (130) may induce the cutting residue (12) to shift in the direction in which the comb pattern (133) is inclined.

Therefore, the discharge device (100) of the present invention can prevent disconnection due to interference occurrence between the cut electrodes (11) (slitting lanes) generated without performing meandering adjustment in the discharge process of the cutting residue (12), and can also prevent the separated distance between the cutting residue (12) (edge lane) and the cut electrode (11) (slitting lane) from becoming too wide, thereby preventing damage to the cut surface of the cut electrode (11) (slitting lane) from occurring, so that there is an advantage that an electrode (11) quality can be effectively increased.

In addition, the meandering adjustment roller (130) comprise a rotation axis (131) and an elastic roll (132). The rotation axis (131) may be arranged to rotate, to transmit a rotational force to the cutting residue (12). The meandering adjustment roller (130) may comprise a drive part (not shown) adding a rotational force to the rotation axis (131). Furthermore, the meandering adjustment roller (130) may comprise an elastic roll (132) provided on the rotation axis (131). The elastic roll (132) may have a comb pattern (133) formed on the surface. For example, the elastic roll (132) may be a silicone roll or a rubber roll. The rubber may be, for example, natural rubber or synthetic rubber.

Therefore, the discharge device (100) of the present invention comprises the meandering adjustment roller (130) including the elastic roll (132), thereby generating a constant frictional force on the electrode sheet (10) to enable precise meandering adjustment, and it is possible to minimize wear of the electrode sheet (10) by a soft surface.

In addition, the meandering adjustment roller (130) comprises a first comb pattern (133a) arranged to move the position of the cutting residue (12a) in one direction (positive direction of the X-axis). The first comb pattern (133a) may be formed on one side portion based on the center of the rotation axis (131) direction of the meandering adjustment roller

(130). The first comb pattern (133a) may be a comb pattern (133) inclined toward the center from the other side.

The meandering adjustment roller (130) comprises a second comb pattern (133b) arranged to move the position of the cutting residue (12c) in the other direction (negative direction of the X-axis). The second comb pattern (133b) may be positioned apart from the first comb pattern (133a). That is, the second comb pattern (133b) may be formed on the other side portion based on the center of the rotation axis (131) direction of the meandering adjustment roller (130). The second comb pattern (133b) may be a comb pattern (133) inclined toward the center from one side.

In addition, the first comb pattern (133a) and the second comb pattern (133b) may be arranged to apply forces to the cutting residue passing through each comb pattern in directions toward the center of the rotation axis direction of the meandering adjustment roller, respectively.

Specifically, referring to Figure 5, the first comb pattern (133a) may be formed on one side portion based on the center of the rotation axis (131) direction of the meandering adjustment roller (130), and may be arranged to apply a force to the cutting residue passing through the first comb pattern (133a) in a direction toward the center of the rotation axis direction of the meandering adjustment roller.

Also, the second comb pattern (133b) may be formed on the other side portion based on the center of the rotation axis (131) of the meandering adjustment roller (130), and may be arranged to apply a force to the cutting residue passing through the second comb pattern (133b) in a direction toward the center of the rotation axis direction of the meandering adjustment roller.

In addition, a plain pattern (130a) may be configured between the first comb pattern (133a) and the second comb pattern (133b) formed on the roll surface. That is, the plain pattern (130a) portion may be referred to as a portion where the cutting residue (12b) is not meandering-adjusted in any direction.

Furthermore, the discharge device (100) of the present invention may comprise a position adjustment part (135) arranged to adjust the position of the meandering adjustment roller (130) in one direction or the other direction. The position adjustment part (135) may be provided with a dial (135a) arranged so that a worker can manually adjust the position of the meandering adjustment roller (130). For example, when the worker manually rotates the dial (135a) clockwise, the roll position of the meandering adjustment roller (130) may be slightly moved in the X-axis direction. Conversely, when the worker manually rotates the dial (135a) counterclockwise, the roll position of the meandering adjustment roller (130) may be slightly moved in the opposite direction of the X-axis direction. Therefore, the discharge device (100) of the present invention may precisely adjust the position of the meandering adjustment roller (130) can adjust the position of the meandering adjustment roller (130) precisely by comprising the position adjustment part (135), thereby enabling more precise meandering adjustment.

Also, the discharge device (100) of the present invention may comprise a tension adjustment roller (140). The tension adjustment roller (140) may be arranged to pressurize the transferred cutting residue (12), to maintain tension of the cutting residue (12) wound around the discharge roller (120) constantly. The tension adjustment roller (140) may comprise a nip roll. The nip roll may be provided with a roll made of, for example, a rubber material.

In addition, the discharge device (100) of the present invention may further comprise a suction unit (115). The suction unit (115) may be arranged to discharge the cutting residue (12) to the outside by suction. The suction unit (115) may be formed with a suction port (115a) sucking air. Therefore, the discharge device of the present invention can effectively recover the cutting residue (12) by using the suction unit (115), and can effectively suck and remove debris or dust, and the like generated in the cutting process.

Meanwhile, the present application provides an electrode slitting system (200) according to one example of the present invention. Specifically, the electrode slitting system (200) is a system in which that an electrode sheet (10) is cut in a width direction (W) perpendicular to a running direction (F) of the electrode sheet (10) to form a plurality of electrodes (11), as in Figure 2. In addition, to this end, the electrode slitting system (200) comprises a supply part (210) supplying the electrode sheet (10). The supply part (210) comprises, together with an unwinder, a drive part (211) driving the unwinder.

The electrode slitting system (200) comprises an electrode cutting part (220) forming a plurality of electrodes (11) by cutting the electrode sheet (10) supplied from the supply part (210) in the width direction. The electrode slitting system (200) comprises a winding part (230) provided with a recovery roll winding the plurality of electrodes (11). The winding part (230) comprise, together with a winder, a drive part (231) driving the winder.

Also, the electrode slitting system (200) comprises a transfer roller (240) arranged to transfer the plurality of electrodes (11) to the winding part (230). The electrode slitting system (200) comprises a discharge part (110) discharging the cutting residue (12) remaining after cutting an electrode sheet (10) to the outside. The electrode slitting system (200) comprises a discharge roller (120) arranged to transfer the cutting residue (12) to the discharge part (110).

In addition, the electrode slitting system (200) comprises a meandering adjustment roller (130). The meandering adjustment roller (130) may be provided during a transfer process of the discharge part (110) in the electrode cutting part (220). The meandering adjustment roller (130) has a structured surface in at least some regions to control the position of the cutting residue (12) in contact with the roll surface in one direction or the other direction. Here, the structured surface may be a surface on which a comb pattern (133) is formed.

Therefore, the electrode slitting system (200) of the present invention can prevent disconnection due to interference occurrence between the cut electrodes (11) (slitting lanes) generated without performing meandering adjustment in the discharge process of the cutting residue (12) by comprising the meandering adjustment roller (130), and can also prevent the separated distance between the cutting residue (12) (edge lane) and the cut electrode (11) (slitting lane) from becoming too wide, thereby preventing damage to the cut surface of the cut electrode (11) (slitting lane) from occurring, so that there is an advantage that an electrode quality can be effectively increased.

Also, the meandering adjustment roller (130) comprises a rotation axis (131) arranged to rotate, to transmit a rotational force to the cutting residue (12). It may comprise an elastic roll (132) provided on such a rotation axis (131) and having a comb pattern (133) formed on the surface. Here, the rotation axis (131) and the elastic roll (132) of the meandering adjustment roller (130) are like or identical to the rotation axis (131) and the elastic roll (132) of the meandering adjustment roller (130) in the discharge device (100) as described above, so that the detailed descriptions thereof will be omitted.

In addition, in the meandering adjustment roller (130), a first comb pattern (133a) arranged so that to adjust meandering of the cut portion of the electrode sheet (10), the position of the cutting residue (12) is moved in one direction on the meandering adjustment roller (130), and a second comb pattern (133b) arranged so that it is moved in the other direction on the meandering adjustment roller (130) may be formed on the surface.

Furthermore, the first comb pattern (133a) may be a comb patter (133) formed on one side portion based on the center of the rotation axis (131) direction of the meandering adjustment roller (130), and inclined toward the center from one side, and the second comb pattern (133b) may be a comb pattern (133) formed on the other side portion based on the center of the rotation axis (131) direction of the meandering adjustment roller (130), and inclined toward the center from the other side, and a plain pattern (130a) may be configured between the first comb pattern (133a) and the second comb pattern (133b) on the roll surface.

Specifically, referring to Figure 5, the first comb pattern (133a) may be formed on one side portion based on the center of the rotation axis (131) direction of the meandering adjustment roller (130), and may be arranged to apply a force in a direction toward the center of the rotation axis direction of the meandering adjustment roller to the cutting residue passing through the first comb pattern (133a).

Also, the second comb pattern (133b) may be formed on the other side portion based on the center of the rotation axis (131) direction of the meandering adjustment roller (130), and may be arranged to apply a force in a direction toward the center of the rotation axis direction of the meandering adjustment roller to the cutting residue passing through the second comb pattern (133b).

In addition, the electrode slitting system (200) of the present invention may further comprise a position adjustment part (135) arranged to adjust the position of the meandering adjustment roller (130) in one direction or the other direction. Here, the position adjustment part (135) is like or identical to the position adjustment part (135) of the discharge device (100) as described above, so that the detailed descriptions thereof will be omitted.

Furthermore, the electrode slitting system (200) of the present invention may further comprise a tension adjustment roller (140) arranged to pressurize the transferred cutting residue (12), to maintain tension of the cutting residue (12) wound around the discharge roller (120) constantly. Here, the tension adjustment roller (140) is like or identical to the tension adjustment roller (140) of the discharge device (100) as described above, so that the detailed descriptions thereof will be omitted.

In addition, the discharge part (110) may include a suction unit (115) arranged to discharge the cutting residue (12) to the outside by suction. Here, the suction unit (115) is like or identical to the suction unit (115) of the discharge device (100) as described above, so that the detailed descriptions thereof will be omitted.

Figure 6 is a perspective diagram schematically showing an appearance in which meandering is adjusted through a meandering adjustment roller of a discharge device according to another example of the present invention.

Referring to Figure 6, the discharge device (100) according to another example of the present invention may further comprise a position sensing part (150) (not shown) sensing the position of the cutting residue (12c) on the meandering adjustment roller (130) together with the position adjustment part (135) adjusting the position of the meandering adjustment roller (130). For example, the position sensing part (150) may comprise a camera (151) photographing the cutting residue (12c) and the meandering adjustment roller (130), and an analysis unit (not shown) analyzing the extent to which the cutting residue (12c) deviates from the proper position by analyzing the image generated through such a camera (151). For example, the analysis unit may be a computing device capable of analyzing contents of an image file.

For example, if the position sensing part (150) detects that the cutting residue (12c) does not move from the set position on the meandering adjustment roller (130), it may control the position adjustment part (135) so that the position of the meandering adjustment roller (130) is moved and adjusted in the rotation axis direction.

Accordingly, the discharge device (100) of the present invention can perform more precise meandering adjustment by further comprising the position sensing part (150).

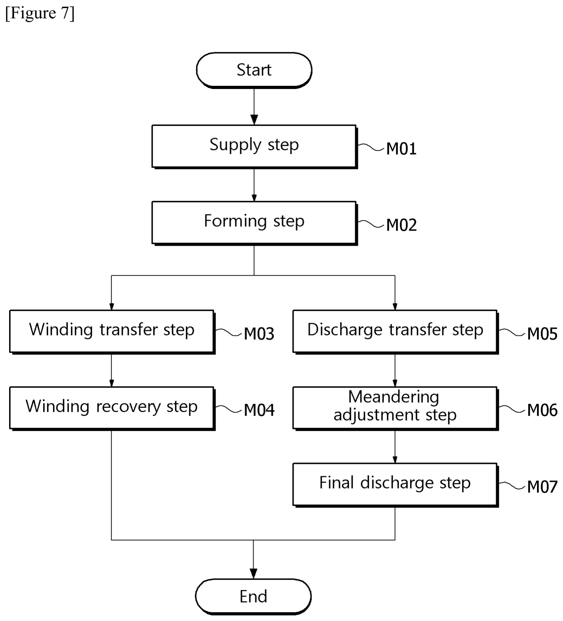

Figure 7 is a flowchart showing a method for manufacturing a plurality of electrodes according to one example of the present invention.

Referring to Figure 7 together with Figures 3 to 5 again, the present invention provides a method for manufacturing a plurality of electrodes (11) by cutting an electrode sheet (10). Specifically, the electrode (11) manufacturing method of the present invention manufactures a plurality of electrodes (11) by cutting an electrode sheet (10) using an electrode slitting system (200) comprising a supply part (210), an electrode cutting part (220), a winding part (230), a transfer roller (240), a discharge part (110), a discharge roller (120), and a meandering adjustment roller (130).

More specifically, the electrode (11) manufacturing method of the present invention comprises a supply step (M01). In the supply step (M01), the supply part (210) supplies an electrode sheet (10) to the electrode cutting part (220).

Also, the electrode (11) manufacturing method of the present invention comprises a forming step (M02). In the forming step (M02), the electrode cutting part (220) cuts the supplied electrode sheet (10) in the width direction to form a plurality of electrodes (11).

In addition, the electrode (11) manufacturing method of the present invention comprises a winding transfer step (M03). The winding transfer step (M03) transfers the formed plurality of electrodes (11) to the winding part (230).

Furthermore, the electrode (11) manufacturing method of the present invention comprises a winding recovery step (M04). In the winding recovery step (M04), the winding part (230) winds the formed plurality of electrodes (11).

Also, the electrode (11) manufacturing method of the present invention comprises a discharge transfer step (M05). In the discharge transfer step (M05), the discharge roller (120) transfers the cutting residue (12) remaining after cutting the electrode sheet (10) to the discharge part (110).

In addition, the electrode (11) manufacturing method of the present invention comprises a meandering adjustment step (M06). In the meandering adjustment step (M06), the meandering adjustment roller (130) adjusts the position of the cutting residue (12) in contact with the roll surface during the transfer process of the discharge part (110) in the electrode cutting part (220) in one direction or the other direction.

Furthermore, the electrode (11) manufacturing method of the present invention comprises a final discharge step (M07). In the final discharge step (M07), the discharge part (110) may discharge the cutting residue (12) to the outside.

For example, the winding transfer step (M03) and the winding recovery step (M04), and the discharge transfer step (M05), the meandering adjustment step (M06), and the final discharge step (M07) may be performed together. That is, the formed electrode (11) may be transferred for winding, and the generated cutting residue (12) may be discharged and moved for disposal.

Therefore, the electrode (11) manufacturing method of the present invention can prevent disconnection due to interference occurrence between the cut electrodes (11) (slitting lanes) generated without performing meandering adjustment in the discharge process of the cutting residue (12) by comprising the meandering adjustment step (M06), and can also prevent the separated distance between the cutting residue (12) (edge lane) and the cut electrode (11) (slitting lane) from becoming too wide, thereby preventing damage to the cut surface of the cut electrode (11) (slitting lane) from occurring, so that there is an advantage that an electrode (11) quality can be effectively increased.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

Through one example of the present invention, the discharge device of the present invention can prevent disconnection due to interference occurrence between the cut electrodes generated without performing meandering adjustment in the discharge process.

## Claims

1. A discharge device arranged so that to form a plurality of electrodes, an electrode sheet is cut in a width direction, and then the remaining cutting residue excluding the plurality of electrodes is discharged to the outside, wherein the discharge device is **characterized by** comprising:
a discharge part arranged to discharge the cutting residue to the outside;
a discharge guide roller arranged to transfer the cutting residue to the discharge part; and
a meandering adjustment roller provided during a process of transferring the cutting residue to the discharge part, and having a structured surface in at least some regions so that a position of the cutting residue in contact with a roll surface is adjusted in one direction or the other direction.

2. The discharge device according to claim 1, **characterized in that**
the structured surface comprises
a comb pattern arranged in a direction inclined with respect to a rotation axis of the meandering adjustment roller.

3. The discharge device according to claim 2, **characterized in that**
the meandering adjustment roller comprises
a rotation axis arranged to rotate, to transmit a rotational force to the cutting residue; and
an elastic roll provided on the rotation axis and having the comb pattern formed on a surface.

4. The discharge device according to claim 2, wherein
in the meandering adjustment roller,
a first comb pattern arranged to move the position of the cutting residue in one direction on the meandering adjustment roller; and
a second comb pattern positioned apart from the first comb pattern and arranged to move it in the other direction on the meandering adjustment roller are formed on the surface, and
the first comb pattern and the second comb pattern are arranged to apply forces to the cutting residue passing through each comb pattern in directions toward the center of the rotation axis direction of the meandering adjustment roller, respectively.

5. The discharge device according to claim 4, **characterized in that**
the first comb pattern is
a comb pattern formed on one side portion based on the center of the rotation axis direction of the meandering adjustment roller, and inclined toward the center from one side, and
the second comb pattern is
a comb pattern formed on the other side portion based on the center of the rotation axis direction of the meandering adjustment roller, and inclined toward the center from the other side, and
a plain pattern is configured between the first comb pattern and the second comb pattern.

6. The discharge device according to claim 2, further comprising
a position adjustment part arranged to adjust the position of the meandering adjustment roller in one direction or the other direction.

7. The discharge device according to claim 2, further comprising
a tension adjustment roller arranged to pressurize the cutting residue to be transferred, to maintain the tension of the cutting residue wound around the discharge guide roller constantly.

8. An electrode slitting system for forming a plurality of electrodes by cutting an electrode sheet in a width direction, wherein the electrode slitting system is **characterized by** comprising:
a supply part supplying the electrode sheet;
an electrode cutting part forming a plurality of electrodes by cutting the electrode sheet supplied from the supply part in a width direction;
a winding part provided with a recovery roll winding the plurality of electrodes;
a transfer roller arranged to transfer the plurality of electrodes to the winding part;
a discharge part discharging the cutting residue remaining after cutting the electrode sheet to the outside;
a discharge guide roller arranged to transfer the cutting residue to the discharge part; and
a meandering adjustment roller provided during a transfer process of the discharge part in the electrode cutting part, and having a structured surface in at least some regions on a surface so that a position of the cutting residue in contact with a roll surface is adjusted in one direction or the other direction.

9. The electrode slitting system according to claim 8, **characterized in that**
the structured surface comprises a comb pattern arranged in a direction inclined with respect to a rotation axis of the meandering adjustment roller.

10. The electrode slitting system according to claim 9, **characterized in that**
the meandering adjustment roller comprises
a rotation axis arranged to rotate, to transmit a rotational force to the cutting residue; and
an elastic roll provided on the rotation axis and having the comb pattern formed on a surface.

11. The electrode slitting system according to claim 9, wherein
in the meandering adjustment roller,
to adjust the meandering of the cut portion of the electrode sheet, a first comb pattern arranged to move the position of the cutting residue in one direction on the meandering adjustment roller; and
a second comb pattern positioned apart from the first comb pattern and arranged to move it in the other direction on the meandering adjustment roller are formed on the surface, and
the first comb pattern and the second comb pattern are arranged to apply forces to the cutting residue passing through each comb pattern in directions toward the center of the rotation axis direction of the meandering adjustment roller, respectively.

12. The electrode slitting system according to claim 11, **characterized in that**
the first comb pattern is
a comb pattern formed on one side portion based on the center of the rotation axis direction of the meandering adjustment roller, and inclined toward the center from one side, and
the second comb pattern is
a comb pattern formed on the other side portion based on the center of the rotation axis direction of the meandering adjustment roller, and inclined toward the center from the other side, and
a plain pattern is configured between the first comb pattern and the second comb pattern.

13. The electrode slitting system according to claim 9, further comprising
a position adjustment part arranged to adjust the position of the meandering adjustment roller in one direction or the other direction.

14. The electrode slitting system according to claim 9, further comprising
a tension adjustment roller arranged to pressurize the cutting residue to be transferred, to maintain the tension of the cutting residue wound around the discharge guide roller constantly.

15. A method for manufacturing a plurality of electrodes by cutting an electrode sheet using a slitting system comprising a supply part, an electrode cutting part, a winding part, a transfer roller, a discharge part, a discharge guide roller, and a meandering adjustment roller, wherein the electrode manufacturing method is **characterized by** comprising:
a supply step in which the supply part supplies the electrode sheets to the electrode cutting part;
a forming step in which the electrode cutting part cuts the supplied electrode sheets in a width direction to form a plurality of electrodes;
a winding transfer step in which the formed plurality of electrodes is transferred to the winding part;
a winding recovery step in which the winding part winds the formed plurality of electrodes;
a discharge transfer step in which the discharge guide roller transfers the cutting residue remaining after cutting the electrode sheet to the discharge part;
a meandering adjustment step in which the meandering adjustment roller adjusts a position of the cutting residue in contact with a roll surface during a transfer process of the discharge part in the electrode cutting part in one direction or the other direction; and
a final discharge step in which the discharge part discharges the cutting residue to the outside.
